# EUROPÄISCHE PATENTSCHRIFT

(11) **EP 3 212 814 B1**
(45) Veröffentlichungstag und Bekanntmachung des Hinweises auf die Patenterteilung: **06.01.2021**
(21) Anmeldenummer: 15790903.7
(22) Anmeldetag: 02.11.2015
(51) Int. Cl.: C22B 1/00, C22B 3/12, C22B 3/22, C22B 7/00, C22B 26/12, H01M 10/54, H01M 10/0525

(54) **VERFAHREN ZUR RÜCKGEWINNUNG VON LITHIUM AUS LITHIUM-SCHWEFEL-AKKUMULATOREN**
METHOD FOR RECOVERING LITHIUM FROM LITHIUM-SULFUR ACCUMULATORS
PROCÉDÉ DE RÉCUPÉRATION DE LITHIUM À PARTIR D'ACCUMULATEURS LITHIUM-SOUFRE

(30) Priorität: 31.10.2014 DE 102014222301
(43) Veröffentlichungstag der Anmeldung: 06.09.2017
(73) Patentinhaber: Albemarle Germany GmbH, 65926 Frankfurt am Main (DE)
(72) Erfinder: MÜLLER, Marc-Christian, 55437 Ober-Hilbersheim (DE); PIETZNER, Sebastian, 65779 Kelkheim (DE); VITZE, Hannes, 65510 Idstein (DE); NICKEL, Vera, 35708 Haiger (DE); STEINBILD, Martin, 60322 Frankfurt (DE); WILLEMS, Johannes, 60489 Frankfurt (DE)
(74) Vertreter: Uexküll & Stolberg
(86) Internationale Anmeldenummer: PCT/EP2015/075465
(87) Internationale Veröffentlichungsnummer: WO 2017/059931

(56) Entgegenhaltungen:
- EP-A1- 1 204 998
- EP-A1- 2 653 573
- US-A- 4 637 928
- US-A1- 2015 080 630
- HEEGN H: "Effektiv getrennt - Effective separated", AT MINERAL PROCESSING,, Bd. 50, Nr. 10, 1. Oktober 2009 (2009-10-01), Seiten 50-63, XP001548338, ISSN: 1434-9302

## Beschreibung

Gegenstand der Erfindung ist ein Verfahren zur Rückgewinnung von Lithium aus Lithium-Schwefel-Akkumulatoren.

Mobile elektronische Geräte benötigen zur unabhängigen Stromversorgung immer leistungsfähigere wieder aufladbare Batterien. Für diese Zwecke werden wegen ihrer volumetrischen Energiedichte ausgedrückt in Wh/m³, der Zyklenbeständigkeit und der geringen Selbstentladung Lithiumbatterien eingesetzt. Lithium-Schwefel-Akkumulatoren werden als sehr zukunftsträchtige galvanische Elemente angesehen. Das aktive Kathodenmaterialien in diesen Batterien besteht aus Lithiumsulfid-Komposit, aus dem beim Ladevorgang Lithiumionen freigesetzt und in die Anode transportiert und dort als metallisches Lithium abgeschieden oder in einen Hostmaterial wie z. B. Silizium, Zinn oder Aluminium als Legierung gespeichert werden. Großformatige Lithiumakkumulatoren werden für stationäre Anwendungen (power back-up) oder im Automobilbereich für Traktionszwecke (Hybridantriebe oder reinelektrischen Antrieb) eingesetzt. Da mit der Größe und der Anzahl der hergestellten, ge- und anschließend verbrauchten Batterien die Menge der darin enthaltenen Wertstoffe wächst, ist ein ökonomisches Verfahren zur Rückgewinnung des in den Batterien enthaltenen Lithiums erforderlich.

Aus dem Dokument US 8,557,412 B2 ist ein Verfahren für die Behandlung von Batteriebestandteilen bekannt, bei dem die Batteriebestandteile mindestens ein Lithium enthaltendes aktives Kathodenmaterial und ein Lithium enthaltendes Feststoffelektrolyt-Material aufweisen. Die Behandlung erfolgt in der Weise, dass die genannten Batteriebestandteile mit einer Prozessflüssigkeit wie Wasser zur Bildung von Schwefelwasserstoff behandelt und dass Lithium aus dem Feststoffelektrolyt-Material herausgelöst sowie zu Lithiumsulfid umgewandelt wird. Das unlösliche Kathodenmaterial wird danach abgetrennt und die Lithiumkomponente zurückgewonnen.

Das bekannte Verfahren beschreibt lediglich die Aufarbeitung von Feststoffelektrolyt-Zellen mit Interkalations-Elektrodenmaterialien.

Relevanter Stand der Technik ist auch aus den Dokumenten US 2015/080630 A1, EP 1 204 998 A1, EP 2 653 573 A1 und US 4 637 928 A bekannt.

Die Erfindung hat sich die Aufgabe gestellt, ein Verfahren anzugeben, durch das die Rückgewinnung von Lithium aus Lithium-Schwefel-Akkumulatoren ermöglicht wird.

Die gestellte Aufgabe wird durch ein Verfahren zur Rückgewinnung von Lithium aus Lithium-Schwefel-Akkumulatoren gelöst, bei dem die Akkumulatoren entladen, geschreddert und durch Sieben oder Sichten zur Abtrennung von Gehäuse und Stromableiterteilen vorgereinigt werden, das verbleibende Material in einem wässrigen Medium dispergiert wird, vorzugsweise im alkalischen Milieu mit einem pH-Wert ≥ 7 um die Freisetzung von Schwefelwasserstoff zu vermeiden, die unlöslichen Bestandteile durch Filtration und der Elektrolyt durch Phasentrennung entfernt werden, woran sich ein Verfahren zur Abtrennung des Lithiums aus dem verbleibenden wässrigen Lithiumsulfid-haltigen Filtrat anschließt.

Die Abtrennung des Lithiums aus dem wässrigen Lithiumsulfid-haltigen Filtrat wird vorzugsweise durch thermische Aufarbeitung in einem Temperaturberich von 100 - 1500 °C vorgenommen. Die thermische Aufarbeitung wird besonders bevorzugt im Temperaturbereich von 200 bis 500 °C in Gegenwart von Sauerstoff vorgenommen. Die Aufarbeitung kann alternativ auch im Temperaturbereich von 100 bis 1500 °C unter Ausschluss von Sauerstoff vorgenommen werden. Die thermische Aufarbeitung kann alternativ auch bei einem gegenüber dem Umgebungsdruck reduziertem Druck in einem Temperaturbereich von 20 - 500 °C vorgenommen werden.

Trotz der Anwesenheit von CO₂ in dem überströmenden Medium (Druckluft) wird keine Carbonatbildung beobachtet. Dies ist erstaunlich, da Lithiumhydroxid, welches sich während der thermischen Aufarbeitung bildete, üblicherweise mit CO₂ zu Lithiumcarbonat reagiert. Ebenso überraschend ist, dass bei einer Temperatur von 500 °C nur ein geringer Anteil des Schwefels mit dem anwesenden Sauerstoff zu Sulfat oxidierte und als Hauptkomponente Lithiumhydroxid gebildet wird.

Alternativ dazu wird die Abtrennung des Lithiums aus dem wässrigen Lithiumsulfid-haltigen Filtrat durch chemische Oxidation vorgenommen. Vorzugsweise erfolgt die chemische Oxidation durch Umsetzung mit Wasserstoffperoxid oder Ozon. Eine alternative Variante besteht in der Oxidation über Hydroxylradikale.

Erfindungsgemäß wird die Abtrennung des Lithiums aus dem wässrigen Lithiumsulfid-haltigen Filtrat auch durch Aufarbeitung unter sauren Bedingungen vorgenommen. Vorzugsweise wird bei der Aufarbeitung unter sauren Bedingungen das enthaltene Lithium durch Zusatz von Schwefel- oder Salzsäure in die entsprechenden Salze überführt. Entstehende Polyschwefelverbindungen werden durch Extraktion abgetrennt. Der vornehmlich entstehende Schwefelwasserstoff entweicht gasförmig aus dem Gemisch.

Alternativ wird die Abtrennung des Lithiums aus dem wässrigen Lithiumsulfid-haltigen Filtrat durch Fällung vorgenommen. Das Lithium wird dabei aus dem Filtrat durch Zusatz von wasserlöslichen Karbonaten als Lithiumkarbonat ausgefällt.

Im Folgenden wird der erfindungsgemäße Prozess an Hand von fünf Beispielen näher beschrieben.

### Beispiel 1

### Thermische Aufarbeitung einer Lithiumsulfid-haltigen Lösung bei 200 °C

Eine wässrige Lithiumsulfid-haltige Lösung mit einem Li-Gehalt von etwa 3 Gew.-% wurde in einem luftdurchströmten Ofen mit einer Heizrate von 10 K/min, wobei min als Abkürzung für Minute steht, auf 200 °C erhitzt. Nach Erreichen der Solltemperatur wurde die Probe für 1 h bei der Solltemperatur unter kontinuierlichem Luftstrom gehalten. Das Abgas wurde über einen Gaswäscher gefüllt mit alkalischer Waschlösung abgeführt. Mittels Phasenanalyse durch Röntgendiffraktometrie (XRD) wurde der Feststoff als Lithiumhydroxid identifiziert. Die isolierte Ausbeute betrug 91 %.

### Beispiel 2

Thermische Aufarbeitung einer Lithiumsulfid-haltigen Lösung bei 500 °C

Eine wässrige Lithiumsulfid-haltige Lösung mit einem Li-Gehalt von etwa 3 Gew.-% wurde in einem luftdurchströmten Ofen mit einer Heizrate von 5 K/min auf 500 °C erhitzt. Nach Erreichen der Solltemperatur wurde die Probe für 1 h bei der Solltemperatur unter kontinuierlichem Luftstrom gehalten. Das Abgas wurde über einen Gaswäscher gefüllt mit alkalischer Waschlösung abgeführt. Die Hauptphase des Rückstands bestand aus Lithiumhydroxid, als Nebenphase wurde 3 LiOH x Li₂SO₄ mittels Röntgendiffraktometrie identifiziert. Die isolierte Ausbeute betrug 77 %.

### Beipiel 3

### Gewinnung von Li₂SO₄ aus einer Lithiumsulfid-haltigen Lösung durch chemische Oxidation

20 g einer wässrigen Lithiumsulfid-haltigen Lösung mit einem Li-Gehalt von etwa 3 Gew.-% wurden in einem temperierbaren Glasreaktor auf 0 °C gekühlt. Unter konstantem Rühren wurde zu der kalten Lösung innerhalb von 20 min 40 g einer halb konzentrierte Wasserstoffperoxid-Lösung (15 Gew.-%) zugegeben. Aufgrund der stark exothermen Reaktion war ein Temperaturanstieg auf 60 °C zu verzeichnen. Nach 1-stündigem Rühren wurde die Lösung eingeengt und bis zur Gewichtskonstant getrocknet. Mittels Phasenanalyse durch Röntgendiffraktometrie wurde der Feststoff als Lithiumsulfat identifiziert, welches sowohl als Li₂SO₄ als auch als Li₂SO₄ x H₂O vorlag. Die isolierte Ausbeute betrug 91 %.

### Beispiel 4

### Gewinnung von Li₂CO₃ aus einer Lithiumsulfid-haltigen Lösung durch Carbonat Fällung

In einem Reaktor wurden 20 g einer wässrigen Lithiumsulfid-haltigen Lösung mit einem Li-Gehalt von etwa 3 Gew.-% vorgelegt. Unter konstantem Rühren wurde die lithiumhaltige Lösung mit 11,5 g Natriumcarbonat versetzt. Die erhaltene Suspension wurde zentrifugiert und das Sediment bei 80 °C bis zur Gewichtskonstanz getrocknet. Mittels Phasenanalyse durch Röntgendiffraktometrie wurde der Feststoff als Lithiumcarbonat identifiziert. Die isolierte Ausbeute betrug 92 %.

### Beispiel 5

### Gewinnung von LiCI aus einer Lithiumsulfid-haltigen Lösung durch saure Aufarbeitung

In einem temperierbaren Reaktor wurden 20 g einer wässrigen Lithiumsulfid-haltigen Lösung mit einem Li-Gehalt von etwa 3 Gew.-% vorgelegt. Der Reaktor war ausgestattet mit einer Destillationseinheit sowie einer Dosiereinheit. Über eine Abgasleitung war ein Gaswäscher mit wässriger alkalischer Waschlösung angeschlossen. Unter stetem Rühren wurde über ein Dosiersystem innerhalb von 10 Minuten 21,2 g halbkonzentrierte Salzsäure (15 Gew.-%) zu dosiert. Das Gemisch wurde bis zur Trockene eingeengt und das Produkt bis zur Gewichtskonstanz getrocknet.

Mittels Phasenanalyse durch Röntgendiffraktometrie wurde der erhaltene Feststoff als Lithiumchlorid identifiziert, das sowohl als LiCI als auch als LiCl x H₂O vorlag. Die isolierte Ausbeute betrug 84 %.

## Patentansprüche

1. Verfahren zur Rückgewinnung von Lithium aus Lithium-Schwefel-Akkumulatoren, **dadurch gekennzeichnet, dass** die Akkumulatoren entladen, geschreddert und durch Sieben oder Sichten zur Abtrennung von Gehäuse und Stromableiterteilen vorgereinigt werden, das verbleibende Material in einem wässrigen Medium dispergiert wird, die unlöslichen Bestandteile durch Filtration und der Elektrolyt durch Phasentrennung entfernt werden, woran sich ein Verfahren zur Abtrennung des Lithiums aus dem verbleibenden Wässrigen Lithiumsulfid-haltigen-Filtrat anschließt.

2. Verfahren nach Anspruch 1, **dadurch gekennzeichnet, dass** das wässrige Medium einen pH-Wert ≥ 7 besitzt.

3. Verfahren nach Anspruch 1 oder 2, **dadurch gekennzeichnet, dass** die Abtrennung des Lithiums aus dem Lithiumsulfid-haltigen Filtrat durch thermische Aufarbeitung vorgenommen wird.

4. Verfahren nach Anspruch 1 oder 2, **dadurch gekennzeichnet, dass** die Abtrennung des Lithiums aus dem Lithiumsulfid-haltigen Filtrat durch chemische Oxidation vorgenommen wird.

5. Verfahren nach Anspruch 1 oder 2, **dadurch gekennzeichnet, dass** die Abtrennung des Lithiums aus dem Lithiumsulfid-haltigen Filtrat durch Aufarbeitung unter sauren Bedingungen vorgenommen wird.

6. Verfahren nach Anspruch 1 oder 2, **dadurch gekennzeichnet, dass** die Abtrennung des Lithiums aus dem Lithiumsulfid-haltigen Filtrat durch Fällung vorgenommen wird.

7. Verfahren nach Anspruch 3, **dadurch gekennzeichnet, dass** die thermische Aufarbeitung im Temperaturbereich von 100 bis 1500°C in Gegenwart von Sauerstoff vorgenommen wird.

8. Verfahren nach Anspruch 3, **dadurch gekennzeichnet, dass** die thermische Aufarbeitung im Temperaturbereich von 100 bis 1500°C unter Ausschluss von Sauerstoff vorgenommen wird.

9. Verfahren nach Anspruch 4, **dadurch gekennzeichnet, dass** die chemische Oxidation durch Umsetzung mit Wasserstoffperoxid, Ozon oder Hydroxylradikalen vorgenommen wird.

10. Verfahren nach Anspruch 5, **dadurch gekennzeichnet, dass** die Aufarbeitung unter sauern Bedingungen durch Zusatz von Schwefel- oder Salzsäure erfolgt, das enthaltene Lithium in die entsprechenden Salze überführt und entstehende Polyschwefelverbindungen durch Extraktion abgetrennt werden.

11. Verfahren nach Anspruch 6, **dadurch gekennzeichnet, dass** das Lithium aus
dem Lithiumsulfid-haltiqen Filtrat durch Zusatz von wasserlöslichen Karbonaten ausgefällt wird.

## Claims

1. Process for the recovery of lithium from lithium-sulfur accumulators, **characterized in that** the accumulators are discharged, shredded and pre-cleaned by sieving or sifting to separate the housing and current conductor parts, the remaining material is dispersed in an aqueous medium, the insoluble components are removed by filtration and the electrolyte is removed by phase separation, whereafter there is a subsequent process for separation of the lithium from the remaining aqueous lithium sulfide-containing filtrate connection.

2. The method according to claim 1, **characterized in that** the aqueous medium has a pH value ≥ 7.

3. The method according to claim 1 or 2, **characterized in that** the separation of the lithium from the lithium sulfide-containing filtrate is carried out by thermal work-up.

4. The method according to claim 1 or 2, **characterized in that** the separation of the lithium from the lithium sulfide-containing filtrate is carried out by chemical oxidation.

5. The method according to claim 1 or 2, **characterized in that** the separation of the lithium from the lithium sulfide-containing filtrate is carried out by working-up under acidic conditions.

6. The method according to claim 1 or 2, **characterized in that** the separation of the lithium from the lithium sulfide-containing filtrate is carried out by precipitation.

7. The method according to claim 3, **characterized in that** the thermal working-up is carried out in a temperature range from 100 to 1500°C in the presence of oxygen.

8. The method according to claim 3, **characterized in that** the thermal working-up is carried out in a temperature range from 100 to 1500°C under exclusion of oxygen.

9. The method according to claim 4, **characterized in that** the chemical oxidation is carried out by reaction with hydrogen peroxide, ozone or hydroxyl radicals.

10. The method according to claim 5, **characterized in that** the working-up is carried out under acidic conditions by adding sulfuric or hydrochloric acid, the contained lithium is converted into the corresponding salts and the resulting polysulfur compounds are separated by extraction.

11. Verfahren according to claim 6, **characterized in that** the lithium from the lithium sulfide-containing filtrate is precipitated by adding water-soluble carbonates.

## Revendications

1. Procédé de récupération de lithium à partir d'accumulateurs lithium-soufre, **caractérisé en ce que** les accumulateurs sont déchargés, broyés et soumis à un nettoyage préalable par tamisage ou triage, en vue de la séparation du boîtier et des éléments collecteurs de courant, que les matériaux restants sont dispersés dans un milieu aqueux, que les composants non solubles sont éliminés par filtration et l'électrolyte par séparation de phase, à la suite de quoi on met en œuvre un procédé pour séparer le lithium du filtrat aqueux restant qui contient du sulfure de lithium.

2. Procédé selon la revendication 1, **caractérisé en ce que** le milieu aqueux présente une valeur de pH ≥ 7.

3. Procédé selon la revendication 1 ou 2, **caractérisé en ce que** la séparation du lithium du filtrat contenant le sulfure de lithium est réalisée par traitement thermique.

4. Procédé selon la revendication 1 ou 2, **caractérisé en ce que** la séparation du lithium du filtrat contenant le sulfure de lithium est réalisée par oxydation chimique.

5. Procédé selon la revendication 1 ou 2, **caractérisé en ce que** la séparation du lithium du filtrat contenant le sulfure de lithium est réalisée par traitement en conditions acides.

6. Procédé selon la revendication 1 ou 2, **caractérisé en ce que** la séparation du lithium du filtrat contenant le sulfure de lithium est réalisée par précipitation.

7. Procédé selon la revendication 3, **caractérisé en ce que** le traitement thermique est réalisé dans la plage de températures allant de 100 à 1 500 °C, en présence d'oxygène.

8. Procédé selon la revendication 3, **caractérisé en ce que** le traitement thermique est réalisé dans la plage de températures allant de 100 à 1 500 °C, en l'absence d'oxygène.

9. Procédé selon la revendication 4, **caractérisé en ce que** l'oxydation chimique est réalisée par transformation avec du peroxyde d'hydrogène, de l'ozone ou des radicaux hydroxyles.

10. Procédé selon la revendication 5, **caractérisé en ce que** le traitement est réalisé en conditions acides, par addition d'acide sulfurique ou d'acide chlorhydrique, que le lithium contenu est transformé en sels correspondants et les composés polysulfures formés sont séparés par extraction.

11. Procédé selon la revendication 6, **caractérisé en ce que** le lithium est séparé du filtrat contenant du sulfure de lithium, par addition de carbonates solubles dans l'eau.
